# EUROPEAN PATENT APPLICATION

(11) **EP 4 803 818 A1**
(43) Date of publication of application: **09.09.2026**
(21) Application number: 26162434.0
(22) Date of filing: 04.03.2026
(51) Int. Cl.: F24F 3/14, F24F 11/79, F24F 11/81, F24F 11/83

(54) **MODULAR SOLID DESICCANT SYSTEM FOR DEDICATED OUTDOOR AIR SYSTEM UNITS**

(30) Priority: 04.03.2025 US 202563766682 P
(71) Applicant: Carrier Corporation, Palm Beach Gardens, FL 33418 (US)
(72) Inventor: HASAN, Ahmed, Indianapolis, 46231 (US); SUR, Aritra, Palm Beach Gardens, 33418 (US)
(74) Representative: Dehns

(57) **Abstract**

A modular unit (140) is provided and includes a housing (141) defining first and second interiors (143, 144), first and second desiccant-coated heat exchanger assemblies (150, 160) disposed in the first and second interiors (143, 144), respectively, an airflow system (170) and a thermal system (180). The airflow system (170) operates in and switches between first and second modes in which air moves through the first and second desiccant-coated heat exchanger assemblies (150, 160) in different directions, respectively, for dehumidifying the air in one of the first and second interiors (143, 144) and rejecting humidified air from another one of the first and second interiors (143, 144). The thermal system (180) is configured to thermally facilitate dehumidification in the one of the first and second interiors (143, 144) and to apply regenerating heat to the one of the first and second desiccant-coated heat exchanger assemblies (150, 160) in the another one of the first and second interiors (143, 144).

## Description

### BACKGROUND

The present invention relates to heating, ventilation, air-conditioning and refrigeration (HVAC&R) systems and, more particularly, to a modular solid desiccant system for dedicated outdoor air system (DOAS) units of an HVAC&R system.

A desiccant is a substance that absorbs moisture from the environment, due to its high affinity for water vapor, thus helping to keep the surrounding area dry. Desiccants typically include hygroscopic materials that attract and hold water vapor from the air to induce or sustain a state of dryness (desiccation) in its vicinity. Industrially, desiccants are widely used for moisture control in packaging, pharmaceuticals, electronics, food preservation and dehumidification systems to maintain product integrity and prevent corrosion.

### BRIEF DESCRIPTION

According to a first aspect of the present invention, a modular unit is provided and includes a housing defining first and second interiors, first and second desiccant-coated heat exchanger assemblies disposed in the first and second interiors, respectively, an airflow system and a thermal system. The airflow system operates in and switches between first and second modes in which air moves through the first and second desiccant-coated heat exchanger assemblies in different directions, respectively, for dehumidifying the air in one of the first and second interiors and rejecting humidified air from another one of the first and second interiors. The thermal system is configured to thermally facilitate dehumidification in the one of the first and second interiors and to apply regenerating heat to the one of the first and second desiccant-coated heat exchanger assemblies in the another one of the first and second interiors.

Optionally, the first desiccant-coated heat exchanger assembly includes a first evaporator-condenser and a first heat exchanger including first coils coated with a first desiccant and the second desiccant-coated heat exchanger assembly includes a second evaporator-condenser and a second heat exchanger including second coils coated with a second desiccant.

Optionally, each of the first and second desiccants includes solid desiccant.

Optionally, each of the first and second desiccants is at least one or more of a material in a metal-organic framework (MOF), a material in a covalent-organic framework (COF), a silica-based gel and a polymeric sorbent.

Optionally, when operating in the first mode, the airflow system drives air through the first desiccant-coated heat exchanger assembly in a first direction whereby the air is at least dehumidified and drives air through the second desiccant-coated heat exchanger assembly in a second direction whereby the air is at least humidified, and, when operating in the second mode, the airflow system drives air through the first desiccant-coated heat exchanger assembly in the second direction whereby the air is at least humidified and drives air through the second desiccant-coated heat exchanger assembly in the first direction whereby the air is at least dehumidified.

Optionally, the airflow system includes one or more baffles to open and close the first and second desiccant-coated heat exchanger assemblies, respectively, when the airflow system operates in the first mode and to close and open the first and second desiccant-coated heat exchanger assemblies, respectively, when the airflow system operates in the second mode.

Optionally, the one or more baffles includes a single baffle pivotable between a first position at which the single baffle opens and closes the first and second desiccant-coated heat exchanger assemblies, respectively, and a second position at which the single baffle closes and opens the first and second desiccant-coated heat exchanger assemblies, respectively.

Optionally, the airflow system includes one or more fans to drive the air through the first and second desiccant-coated heat exchanger assemblies in the different directions.

Optionally, the thermal system includes a fluid loop configured to deliver heated fluid for thermally facilitating the regeneration and to deliver cooled fluid for thermally facilitating dehumidification.

According to a second aspect of the present invention, a heating, ventilation, air-conditioning and refrigeration (HVAC&R) system is provided and includes a rooftop unit (RTU) including an air intake and the modular unit. The housing is attachable to the RTU at the air intake whereby, when operating in the first mode, the airflow system drives the air through the first desiccant-coated heat exchanger assembly and into the air intake, and, when operating in the second mode, the airflow system drives the air through the second desiccant-coated heat exchanger assembly and into the air intake.

Optionally, the RTU includes a supply section including the air intake and an outdoor section upstream from the supply section and including a compressor fluidly coupled to the thermal system.

According to a third aspect of the present invention, a heating, ventilation, air-conditioning and refrigeration (HVAC&R) system is provided and includes a rooftop unit (RTU) through which supply airflow moves in a single direction, the RTU including a supply section including an air intake and an outdoor section upstream from the supply section and a modular unit. The modular unit is attachable to the supply section at the air intake and includes first and second desiccant-coated heat exchanger assemblies oppositely operable in an evaporative and adsorption mode and a condensing and desorption mode to continuously provide a supply of dehumidified air to the supply section via the air intake without reversing the single direction of the supply airflow.

Optionally, the first desiccant-coated heat exchanger assembly includes a first evaporator-condenser and a first heat exchanger including first coils coated with a first desiccant and the second desiccant-coated heat exchanger assembly includes a second evaporator-condenser and a second heat exchanger including second coils coated with a second desiccant.

Optionally, each of the first and second desiccants includes solid desiccant.

Optionally, each of the first and second desiccants is at least one or more of a material in a metal-organic framework (MOF), a material in a covalent-organic framework (COF), a silica-based gel and a polymeric sorbent.

Optionally, the modular unit further includes one or more baffles to open and close the first and second desiccant-coated heat exchanger assemblies, respectively, and to close and open the first and second desiccant-coated heat exchanger assemblies, respectively.

Optionally, the one or more baffles includes a single baffle pivotable between a first position at which the single baffle opens and closes the first and second desiccant-coated heat exchanger assemblies, respectively, and a second position at which the single baffle closes and opens the first and second desiccant-coated heat exchanger assemblies, respectively.

Optionally, the modular unit includes one or more fans to drive air through the first and second desiccant-coated heat exchanger assemblies.

According to a fourth aspect of the present invention, an assembly or retrofitting method of a rooftop unit including a supply section including an air intake and an outdoor section upstream from the supply section is provided. The method includes disposing desiccant-coated heat exchanger assemblies in interiors of a modular unit housing, attaching the modular unit housing to the air intake, moving air through the desiccant-coated heat exchanger assemblies in different directions, respectively, for dehumidifying the air in one of the interiors prior to the air entering the RTU via the air intake and for rejecting humidified air from another one of the interiors, thermally facilitating the dehumidifying of the air in the one of the interiors and applying regenerating heat to the one of the desiccant-coated heat exchanger assemblies in the another one of the interiors.

Optionally, the assembly or retrofitting method further includes determining that the desiccant-coated heat exchanger in the one of the interiors in which the air is dehumidified is saturated and switching the different directions for dehumidifying the air in the another one of the interiors and for rejecting humidified air from the one of the interiors, thermally facilitating the dehumidifying of the air in the another one of the interiors and applying regenerating heat to the one of the desiccant-coated heat exchanger assemblies in the one of the interiors.

Additional features and advantages are realized through the techniques of the present invention. Other embodiments and aspects of the invention are described in detail herein and are considered a part of the claimed technical concept. For a better understanding of the present invention with the advantages and the features, refer to the description and to the drawings.

### BRIEF DESCRIPTION OF THE DRAWINGS

For a more complete understanding of the present invention, reference is now made to the following brief description, taken in connection with the accompanying exemplary drawings and detailed description, wherein like reference numerals represent like parts:
FIG. 1A is a schematic diagram of a rooftop unit (RTU) of a heating, ventilation, air-conditioning and refrigeration (HVAC&R) system and a modular unit;
FIG. 1B is an enlarged view of desiccant-coated coils of the modular unit of FIG. 1A;
FIG. 2 is a schematic diagram of a pivotable baffle of the modular unit of FIGS. 1A and 1B;
FIG. 3A is a perspective view of a rooftop unit with a modular unit attached thereto;
FIG. 3B is a cutaway perspective view showing internal operations of the modular unit of FIG. 3A; and
FIG. 4 is a flow diagram illustrating an assembly or retrofitting method of a rooftop unit (RTU).

### DETAILED DESCRIPTION

Currently, technology for dedicated DOAS units and rooftop units (RTUs) relies on over-cooling of intake air to the required dew point in order to remove moisture in a dehumidification process. This is followed by reheat using hot gas or an electric heater to provide supply air at the desired conditions. It has been found, however, that the sequence of over-cooling followed by reheating tends to increase energy usage as a function of increases in operational costs and carbon dioxide footprints and also tends to reduce unit ratings.

Thus, as will be described below, an add-on air dehumidification system for HVAC&R applications is provided in a modular form that can be added to new and/or existing RTUs upstream of outdoor air intakes. The added module uses desiccant coated heat exchangers that will dehumidify air (i.e., remove moisture) to a given relative humidity before air gets cooled by the main unit. The module will include at least two heat exchangers coated with solid desiccants, such as metal-organic frameworks (MOFs), covalent-organic frameworks (COFs), silica-based gels, polymeric sorbents and combinations thereof, and refrigerant switching valves/lines. The module can rely on a unit compressor and refrigerant lines to operate or alternatively have its own compressor for independent operation. The module can have its own fan(s) or rely on a main unit fan. The module can be coupled with a heat recovery ventilator (HRV) as well. This arrangement allows the use of different heat exchanger technologies and/or construction between the main unit and the added module with minimal impact on current assembly lines.

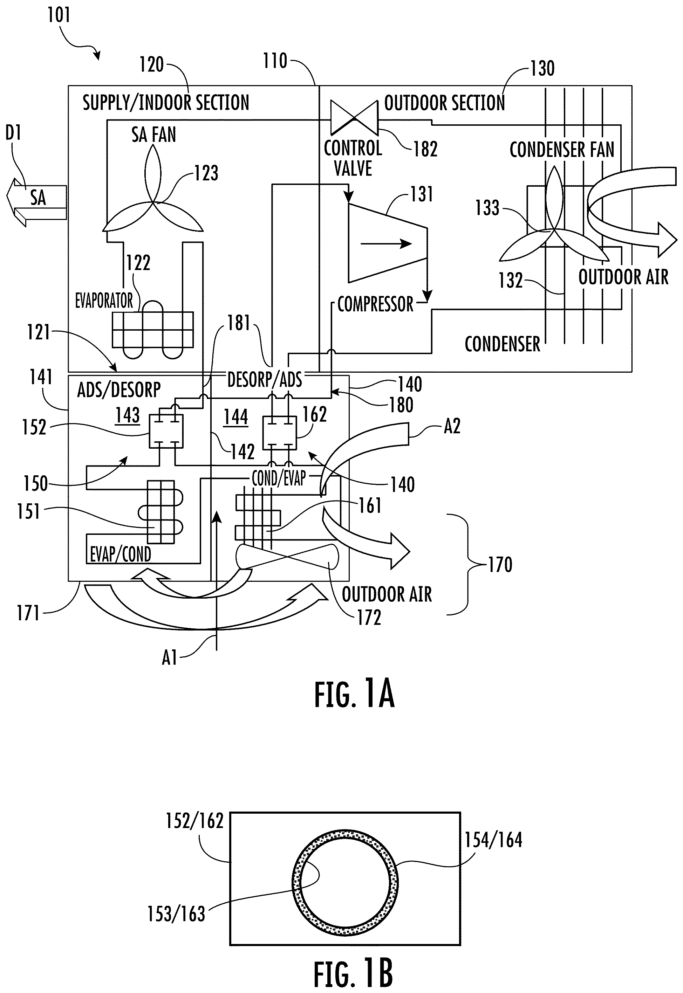

With reference to FIGS. 1A and 1B, a heating, ventilation, air-conditioning and refrigeration (HVAC&R) system 101 is provided. The HVAC&R system 101 includes an RTU 110 through which supply airflow (SA) moves in a single direction D1 and a modular unit 140. The RTU 110 includes a supply section 120 and an outdoor section 130. The supply section 120 includes an air intake 121, an evaporator 122 and a supply air fan 123 operably disposed with the evaporator 122. The outdoor section 130 is disposed upstream from the supply section 120 along the single direction D1 and includes a compressor 131, a condenser 132 and a condenser fan 133 operably disposed with the condenser 132. The modular unit 140 is attachable to the supply section 120 at the air intake 121 and includes a housing 141 defining an interior, a central wall 142 dividing the interior of the housing 141 into a first interior 143 and a second interior 144. The modular unit 140 further includes a first desiccant-coated heat exchanger assembly 150 disposed in the first interior 143, a second desiccant-coated heat exchanger assembly 160 disposed in the second interior 144, an airflow system 170 and a thermal system 180.

The modular unit 140 can be attached to the supply section 120 at the air intake 121 in a number of manners including, but not limited to, fastening with internal pipe fittings.

The first and second desiccant-coated heat exchanger assemblies 150 and 160 are oppositely operable in a cooling and adsorption mode and a heating and desorption mode to continuously provide a supply of dehumidified air to the supply section 120 via the air intake 121 without reversing the single direction D1 of the supply airflow. That is, the first desiccant-coated heat exchanger assembly 150 can be operable in the cooling and adsorption mode and the second desiccant-coated heat exchanger assembly 160 can be operable in the heating and desorption mode in a case that can be characterized as a first mode of operation (to be described below) and the second desiccant-coated heat exchanger assembly 160 can be operable in the cooling and adsorption mode and the first desiccant-coated heat exchanger assembly 150 can be operable in the heating and desorption mode in a case that can be characterized as a second mode of operation (to be described below).

The airflow system 170 is configured to operate in and switch between the first and second modes of operation in which air moves through the first and second desiccant-coated heat exchanger assemblies 150 and 160 in different directions, respectively, for dehumidifying the air in one of the first and second interiors 143 and 144 and for rejecting humidified air from another one of the first and second interiors 143 and 144.

The airflow system 170 is configured to operate in the first mode of operation by driving air to move through the first desiccant-coated heat exchanger assembly 150 in the first interior 143 in a first direction A1 whereby the air is dehumidified with a possible change in temperature prior to entering the RTU 120 via the air intake 121 and by driving air to move through the second desiccant-coated heat exchanger assembly 160 in the second interior 144 in a second direction A2, which differs from the first direction A1, whereby the air is humidified with a possible change in temperature prior to being rejected to an exterior of the modular unit 140 or prior to being redirected for another purpose (e.g., water harvesting, indoor plants, etc.).

The airflow system 170 is configured to operate in the second mode of operation by driving air to move through the second desiccant-coated heat exchanger assembly 160 in the second interior 144 in the first direction A1 whereby the air is dehumidified with a possible change in temperature prior to entering the RTU 120 via the air intake 121 and by driving air to move through the first desiccant-coated heat exchanger assembly 150 in the first interior 143 in the second direction A2 whereby the air is humidified with a possible change in temperature prior to being rejected to an exterior of the modular unit 140 or prior to being redirected for another purpose (e.g., water harvesting, indoor plants, etc.).

The thermal system 180 is configured to thermally facilitate dehumidification in the one of the first and second interiors 143 and 144 (i.e., by the corresponding one of the first and second desiccant-coated heat exchanger assemblies 150 and 160) and to apply regenerating heat to the one of the first and second desiccant-coated heat exchanger assemblies 150 and 160 in the another one of the first and second interiors 143 and 144. Thus, in the first mode of operation, the thermal system 180 is configured to cool the air for facilitating and/or promoting dehumidification in the first interior 143 by the first desiccant-coated heat exchanger assembly 150 and to apply regenerating heat to the second desiccant-coated heat exchanger assembly 160 in the second interior 144. Alternatively or additionally, in the first mode of operation, the thermal system 180 can be configured to cool the air in the first interior 143 to thereby counteract the heating effect of the dehumidification by the first desiccant-coated heat exchanger assembly 150. Conversely, in the second mode of operation, the thermal system 180 is configured to cool the air for facilitating and/or promoting dehumidification in the second interior 144 by the second desiccant-coated heat exchanger assembly 160 and to apply regenerating heat to the first desiccant-coated heat exchanger assembly 150 in the first interior 143. Alternatively, in the second mode of operation, the thermal system 180 can be configured to cool the air in the second interior 144 to thereby counteract the heating effect of the dehumidification by the second desiccant-coated heat exchanger assembly 160.

The first desiccant-coated heat exchanger assembly 150 includes a first evaporator-condenser 151, which can operate as either an evaporator or a condenser depending upon the mode of operation of the airflow system 170, and a first heat exchanger 152 including first coils 153 that are coated with a first desiccant 154. The second desiccant-coated heat exchanger assembly 160 includes a second evaporator-condenser 161, which can operate as either an evaporator or a condenser depending upon the mode of operation of the airflow system 170, and a second heat exchanger 162 including second coils 163 that are coated with a second desiccant 164. In accordance with embodiments, each of the first and second desiccants 154 and 164 can include a solid desiccant and, in accordance with further embodiments, each of the first and second desiccants 154 and 164 can include or be provided as at least one or more of a material in a metal-organic framework (MOF), a material in a covalent-organic framework (COF), a silica-based gel, a polymeric sorbent and combinations thereof.

It is to be understood that, since the first and second desiccants 154 and 164 can become saturated over time when operating as adsorbers, the regenerating heat applied by the thermal system 180 serves to desorb or remove moisture from the first and second desiccants 154 and 164. Thus, the time during which the first and second desiccant-coated heat exchanger assemblies 150 and 160 are operable in the first mode or in the second mode can be generally based on an expected time for saturation to occur and an expected time required for desorption. These times can be pre-scheduled and/or varied on a case-by-case basis by manual or automatic inspection of the status of the first and second desiccants 154 and 164.

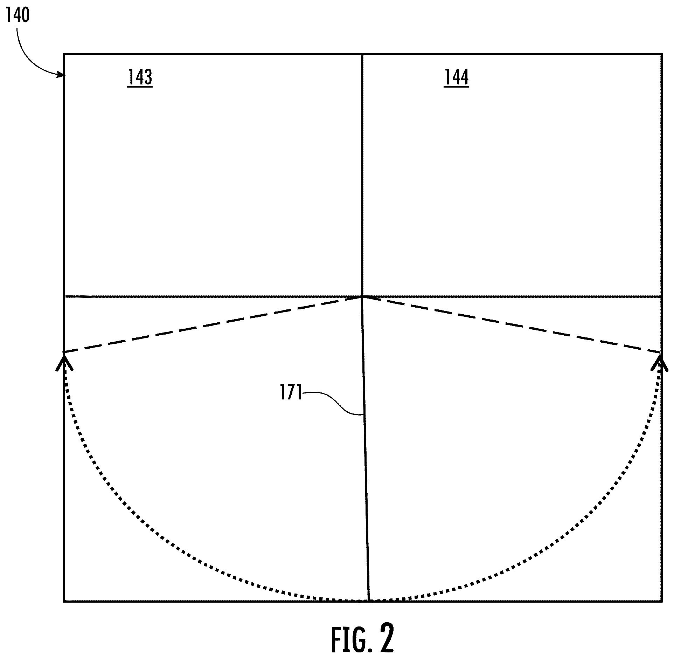

With continued reference to FIGS. 1A and 1B and with additional reference to FIG. 2, the airflow system 170 can include one or more baffles 171 to open and close the first and second desiccant-coated heat exchanger assemblies 150 and 160, respectively, when the airflow system 170 operates in the first mode and to close and open the first and second desiccant-coated heat exchanger assemblies 150 and 160, respectively, when the airflow system 170 operates in the second mode. As shown in FIG. 2, the one or more baffles 171 can include or be provided as a single baffle 171 that is pivotable between a first position at which the single baffle 171 opens and closes the first and second desiccant-coated heat exchanger assemblies 150 and 160, respectively, and a second position at which the single baffle 171 closes and opens the first and second desiccant-coated heat exchanger assemblies 150 and 160, respectively. In addition, as shown in FIG. 1A, the airflow system 170 can also include one or more fans 172 to drive the air through the first and second desiccant-coated heat exchanger assemblies 150 and 160 in the first direction A1 and in the second direction A2. The airflow system 170 can further benefit from airflows driven by the supply air fan 123 and/or by the condenser fan 133 as well as any other fans or pumps provided in the HVAC&R system 101.

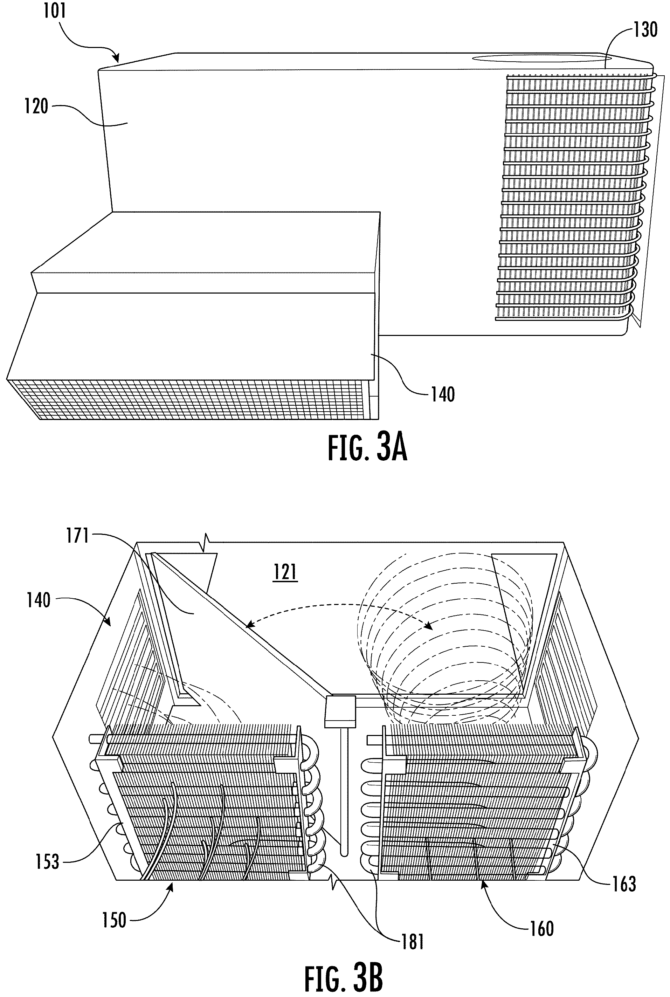

With continued reference to FIGS. 1 and 2 and with additional reference to FIGS. 3A and 3B, operations of the airflow system 170 with the single baffle 171 are illustrated. As shown in FIG. 3A, the modular unit 140 can be attached to the supply section 120 at the air intake 121. As shown in FIG. 3B, the single baffle 171 can be pivoted to one side whereupon the single baffle 171 closes the corresponding one of the first and second desiccant-coated heat exchanger assemblies 150 and 160, which has regenerating heat applied thereto for regenerating the desiccant, and opens the other corresponding one of the first and second desiccant-coated heat exchanger assemblies 150 and 160, which cools the incoming air for dehumidification or cools the incoming air that has been heat by dehumidification prior to the air entering the supply section 120 via the air intake 121.

The thermal system 180 can include or be provided as a fluid loop 181 that is configured to deliver heated fluid to the one of the first and second desiccant-coated heat exchanger assemblies 150 and 160 in the another one of the first and second interiors 142 and 143 and to deliver cooled fluid to the one of the first and second desiccant-coated heat exchanger assemblies 150 and 160 in the one of the first and second interiors 142 and 143. As shown in FIG. 1A, the fluid loop 181 can extend through the first heat exchanger 152 and can effectively form components of the first evaporator-condenser 151 and can extend through the second heat exchanger 162 and can effectively form components of the second evaporator-condenser 161. In addition, as shown in FIG. 1A, the fluid loop 181 can extend through the evaporator 122, the condenser 132 and can be fluid coupled with the compressor 131 and can include a control valve 182 to control fluid flows through the fluid loop 181.

When the airflow system 170 is operable in the first mode of operation, the first desiccant-coated heat exchanger assembly 150 is operable in the evaporative and adsorption mode and the second desiccant-coated heat exchanger assembly 160 is operable in the condensing and desorption mode. In these cases, the fluid loop 181 delivers heated fluid for regenerating heat to the second desiccant-coated heat exchanger assembly 160 in the second interior 144 and delivers cooled fluid for thermally facilitating dehumidification to the first desiccant-coated heat exchanger assembly 150 in the first interior 143.

When the airflow system 170 is operable in the second mode of operation, the second desiccant-coated heat exchanger assembly 160 is operable in the evaporative and adsorption mode and the first desiccant-coated heat exchanger assembly 150 is operable in the condensing and desorption mode. In these cases, the fluid loop 181 delivers heated fluid for regenerating heat to the first desiccant-coated heat exchanger assembly 150 in the first interior 143 and delivers cooled fluid for thermally facilitating dehumidification to the second desiccant-coated heat exchanger assembly 160 in the second interior 144.

A degree of cooling provided by the thermal system 180 can be binary (i.e., on or off) or optimized to be sufficient for dehumidification or for counteracting heating caused by dehumidification and a degree of heating provided by the thermal system 180 can be binary (i.e., on or off) or optimized to be sufficient for regenerating the corresponding one of the first and second desiccant-coated heat exchanger assemblies 150 and 160. Controls for the optimization can be effectuated by the control valve 182 and by other similar fluid control elements deployed along the fluid loop 181 and/or by structural and/or architectural modifications of various elements described herein.

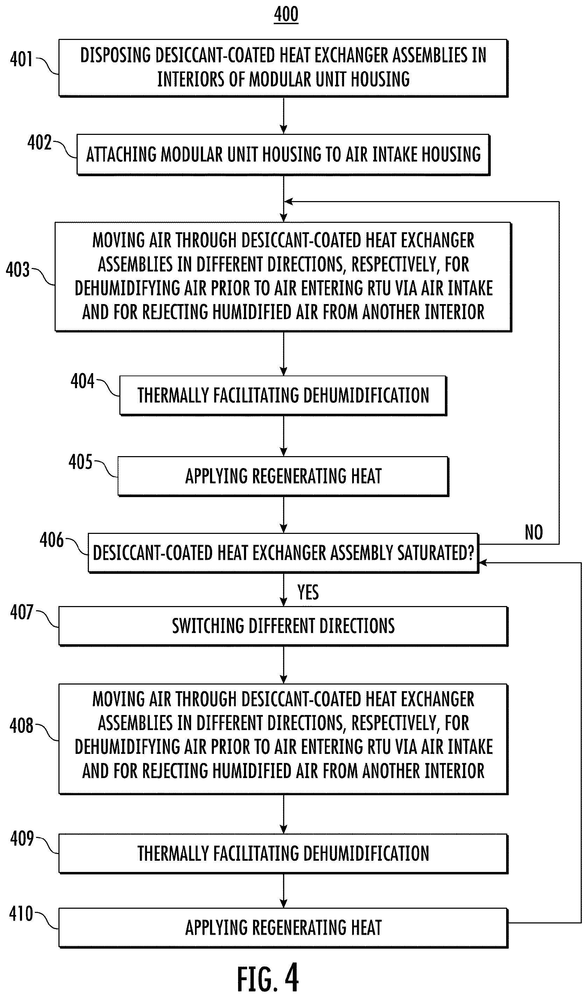

With reference to FIG. 4, an assembly or retrofitting method 400 of an RTU, such as the RTU 110 described above, is provided. As shown in FIG. 4, the assembly or retrofitting method 400 includes disposing desiccant-coated heat exchanger assemblies in interiors of a modular unit housing (block 401), attaching the modular unit housing to the air intake (block 402), moving air through the desiccant-coated heat exchanger assemblies in different directions, respectively, for dehumidifying the air in one of the interiors prior to the air entering the RTU via the air intake and for rejecting humidified air from another one of the interiors (block 403), thermally facilitating the dehumidifying of the air in the one of the interiors (block 404) and applying regenerating heat to the one of the desiccant-coated heat exchanger assemblies in the another one of the interiors (block 405).

The assembly or retrofitting method 400 can further include iteratively determining that the desiccant-coated heat exchanger in the one of the interiors in which the air is dehumidified is saturated by one or more of various sensing operations, such as optical sensing for example (block 406), switching the different directions (block 407), moving air through the desiccant-coated heat exchanger assemblies in the different directions, respectively, for dehumidifying the air in one of the interiors prior to the air entering the RTU via the air intake and for rejecting humidified air from another one of the interiors (block 408), thermally facilitating the dehumidifying of the air in the another one of the interiors (block 409) and applying regenerating heat to the one of the desiccant-coated heat exchanger assemblies in the one of the interiors (block 410).

Technical effects and benefits of the described embodiments are the provision of solid desiccant (MOF) dehumidification increases in unit ratings by 25%-70%, the potential for operation at all unit rating conditions versus existing desiccant wheels that offer limited and/or no dehumidification at certain conditions and the opportunity for deployment of solid desiccant coated heat exchangers for RTU markets without need for repeated refrigerant and air flow reversals within main units. The described embodiments also provide for maintenance of main unit architectures and manufacturing steps that reducing implementation burdens, enables the use of different heat exchanger sizes and technologies for latent loads and allows for normal unit operation when there is an issue with solid desiccant modular unit components.

The corresponding structures, materials, acts, and equivalents of all means or step plus function elements in the claims below are intended to include any structure, material, or act for performing the function in combination with other claimed elements as specifically claimed. The description has been presented for purposes of illustration and description, but is not intended to be exhaustive or limited to the technical concepts in the form disclosed. Many modifications and variations will be apparent to those of ordinary skill in the art without departing from the scope of the invention as set out in the appended claims. The embodiments were chosen and described in order to best explain the principles of the invention and the practical application, and to enable others of ordinary skill in the art to understand the present invention for various embodiments with various modifications as are suited to the particular use contemplated.

While the preferred embodiments to the invention have been described, it will be understood that those skilled in the art, both now and in the future, may make various improvements and enhancements which fall within the scope of the claims which follow.

## Claims

1. A modular unit (140), comprising:
a housing (141) defining first and second interiors (143, 144);
first and second desiccant-coated heat exchanger assemblies (150, 160) disposed in the first and second interiors, respectively;
an airflow system (170) to operate in and switch between first and second modes in which air moves through the first and second desiccant-coated heat exchanger assemblies in different directions, respectively, for dehumidifying the air in one of the first and second interiors and rejecting humidified air from another one of the first and second interiors; and
a thermal system (180) configured to thermally facilitate dehumidification in the one of the first and second interiors and to apply regenerating heat to the one of the first and second desiccant-coated heat exchanger assemblies in the another one of the first and second interiors.

2. The modular unit (140) according to claim 1, wherein:
the first desiccant-coated heat exchanger assembly (150) comprises a first evaporator-condenser (151) and a first heat exchanger (152) comprising first coils (153) coated with a first desiccant (154), and
the second desiccant-coated heat exchanger assembly (160) comprises a second evaporator-condenser (161) and a second heat exchanger (162) comprising second coils (163) coated with a second desiccant (164).

3. The modular unit (140) according to claim 2, wherein each of the first and second desiccants (154, 164) comprises solid desiccant,
or, wherein each of the first and second desiccants (154, 164) is at least one or more of a material in a metal-organic framework, MOF, a material in a covalent-organic framework, COF, a silica-based gel and a polymeric sorbent.

4. The modular unit (140) according to any of claims 1-3, wherein:
when operating in the first mode, the airflow system (170) drives air through the first desiccant-coated heat exchanger assembly (150) in a first direction whereby the air is at least dehumidified and drives air through the second desiccant-coated heat exchanger assembly (160) in a second direction whereby the air is at least humidified, and,
when operating in the second mode, the airflow system drives air through the first desiccant-coated heat exchanger assembly in the second direction whereby the air is at least humidified and drives air through the second desiccant-coated heat exchanger assembly in the first direction whereby the air is at least dehumidified.

5. The modular unit (140) according to any of claims 1-4, wherein the airflow system (170) comprises one or more baffles (171) to open and close the first and second desiccant-coated heat exchanger assemblies (150, 160), respectively, when the airflow system operates in the first mode and to close and open the first and second desiccant-coated heat exchanger assemblies, respectively, when the airflow system operates in the second mode,
optionally, wherein the one or more baffles comprises a single baffle pivotable between a first position at which the single baffle opens and closes the first and second desiccant-coated heat exchanger assemblies, respectively, and a second position at which the single baffle closes and opens the first and second desiccant-coated heat exchanger assemblies, respectively.

6. The modular unit (140) according to any of claims 1-5, wherein the airflow system (170) comprises one or more fans (172) to drive the air through the first and second desiccant-coated heat exchanger assemblies (150, 160) in the different directions,
and/or, wherein the thermal system (180) comprises a fluid loop (181) configured to deliver heated fluid for thermally facilitating the regeneration and to deliver cooled fluid for thermally facilitating dehumidification.

7. A heating, ventilation, air-conditioning and refrigeration, HVAC&R, system (101), comprising:
a rooftop unit, RTU, (110) comprising an air intake (121); and
the modular unit (140) according to claim 1,
wherein the housing (141) is attachable to the RTU at the air intake whereby:
when operating in the first mode, the airflow system drives the air through the first desiccant-coated heat exchanger assembly (150) and into the air intake, and,
when operating in the second mode, the airflow system drives the air through the second desiccant-coated heat exchanger assembly (160) and into the air intake.

8. The HVAC&R system (101) according to claim 7, wherein the RTU (110) comprises:
a supply section (120) comprising the air intake (121); and
an outdoor section (130) upstream from the supply section and comprising a compressor (131) fluidly coupled to the thermal system.

9. A heating, ventilation, air-conditioning and refrigeration, HVAC&R, system (101), comprising:
a rooftop unit, RTU, (110) through which supply airflow moves in a single direction, the RTU comprising a supply section (120) comprising an air intake (121) and an outdoor section (130) upstream from the supply section; and
a modular unit (140) attachable to the supply section at the air intake and comprising first and second desiccant-coated heat exchanger assemblies (150, 160) oppositely operable in an evaporative and adsorption mode and a condensing and desorption mode to continuously provide a supply of dehumidified air to the supply section via the air intake without reversing the single direction of the supply airflow.

10. The HVAC&R system (101) according to claim 9, wherein:
the first desiccant-coated heat exchanger assembly (150) comprises a first evaporator-condenser (151) and a first heat exchanger (152) comprising first coils (153) coated with a first desiccant (154), and
the second desiccant-coated heat exchanger assembly (160) comprises a second evaporator-condenser (161) and a second heat exchanger (162) comprising second coils (163) coated with a second desiccant (164).

11. The HVAC&R system (101) according to claim 10, wherein each of the first and second desiccants (154, 164) comprises solid desiccant,
optionally, wherein each of the first and second desiccants is at least one or more of a material in a metal-organic framework, MOF, a material in a covalent-organic framework, COF, a silica-based gel and a polymeric sorbent.

12. The HVAC&R system (101) according to any of claims 9-11, wherein the modular unit (140) further comprises one or more baffles (171) to open and close the first and second desiccant-coated heat exchanger assemblies (150, 160), respectively, and to close and open the first and second desiccant-coated heat exchanger assemblies, respectively,
optionally, wherein the one or more baffles comprises a single baffle pivotable between a first position at which the single baffle opens and closes the first and second desiccant-coated heat exchanger assemblies, respectively, and a second position at which the single baffle closes and opens the first and second desiccant-coated heat exchanger assemblies, respectively.

13. The HVAC&R system (101) according to any of claims 9-12, wherein the modular unit (140) comprises one or more fans (172) to drive air through the first and second desiccant-coated heat exchanger assemblies (150, 160).

14. An assembly or retrofitting method (400) of a rooftop unit (110) comprising a supply section (120) comprising an air intake (121) and an outdoor section (130) upstream from the supply section, the method comprising:
disposing desiccant-coated heat exchanger assemblies (150, 160) in interiors of a modular unit housing;
attaching the modular unit (140) housing to the air intake;
moving air through the desiccant-coated heat exchanger assemblies in different directions, respectively, for dehumidifying the air in one of the interiors (143, 144) prior to the air entering the RTU via the air intake and for rejecting humidified air from another one of the interiors;
thermally facilitating the dehumidifying of the air in the one of the interiors; and
applying regenerating heat to the one of the desiccant-coated heat exchanger assemblies in the another one of the interiors (143, 144).

15. The assembly or retrofitting method (400) according to claim 14, further comprising:
determining that the desiccant-coated heat exchanger (152, 162) in the one of the interiors (143, 144) in which the air is dehumidified is saturated;
switching the different directions for dehumidifying the air in the another one of the interiors and for rejecting humidified air from the one of the interiors;
thermally facilitating the dehumidifying of the air in the another one of the interiors; and
applying regenerating heat to the one of the desiccant-coated heat exchanger assemblies in the one of the interiors.
